# EUROPÄISCHE PATENTSCHRIFT

(11) **EP 2 231 754 B1**
(45) Veröffentlichungstag und Bekanntmachung des Hinweises auf die Patenterteilung: **20.07.2011**
(21) Anmeldenummer: 08861914.3
(22) Anmeldetag: 09.12.2008
(51) Int. Cl.: C08J 3/03, C08L 83/04, C09D 183/04, C09J 183/04, C09K 3/10, C08L 23/02, C08L 25/06, C08L 25/08, C08L 31/04, C08L 33/08, C08L 33/10, C08L 75/04

(54) **HÄRTBARE ZUSAMMENSETZUNGEN ENTHALTEND WÄSSRIGE DISPERSIONEN VON ORGANOPOLYSILOXANEN**
CURABLE COMPOSITIONS CONTAINING AQUEOUS DISPERSIONS OF ORGANOPOLYSILOXANES
COMPOSITIONS DURCISSABLES CONTENANT DES DISPERSIONS AQUEUSES D'ORGANOPOLYSILOXANES

(30) Priorität: 14.12.2007 DE 102007060919; 03.01.2008 DE 102008003155
(43) Veröffentlichungstag der Anmeldung: 29.09.2010
(73) Patentinhaber: Henkel AG & Co. KGaA, 40589 Düsseldorf (DE)
(72) Erfinder: PLANTENBERG, Thomas, 51371 Leverkusen (DE); HELPENSTEIN, Klaus, 41199 Mönchengladbach (DE); DUNEKAKE, Ralf, 40589 Düsseldorf (DE); KLEIN, Johann, 40593 Düsseldorf (DE)
(86) Internationale Anmeldenummer: PCT/EP2008/067148
(87) Internationale Veröffentlichungsnummer: WO 2009/077389

(56) Entgegenhaltungen:
- EP-A- 0 266 729
- EP-A- 0 410 899
- EP-A- 1 069 148
- WO-A-97/47687
- WO-A-2006/084972
- FR-A- 2 771 098
- US-A- 4 803 233

## Beschreibung

Die vorliegende Erfindung betrifft härtbare Zusammensetzungen auf der Basis von wässrigen Dispersionen von kondensierbaren, insbesondere hydroxyfunktionellen, Organopolysiloxanen und deren Verwendung als Kleb- und Dichtstoff.

Unter Ausschluss von Wasser lagerfähige, bei Zutritt von Wasser bei Raumtemperatur zu Elastomeren vulkanisierende Einkomponenten-Dichtstoffe sind als sogenannte "Silikon-Dichtstoffe" bekannt. Diese Produkte werden in großen Mengen zum Beispiel in der Bauindustrie eingesetzt. Die Basis dieser Mischungen sind Polymere, die durch Silylgruppen terminiert sind, die reaktive Substituenten wie hydrolysierbare Gruppen tragen. Die hydrolysierbaren Gruppen können zum Beispiel Alkoxygruppen, Acetoxygruppen, Aminogruppen oder Oximgruppen sein. Diese Dichtstoffe zeichnen sich dadurch aus, dass sie auf einer Vielzahl von Substraten ein ausgezeichnetes Haftverhalten aufweisen. Nachteilig ist bei diesen Dichtstoffen jedoch, dass die hydrolysierbaren Gruppen während des Vernetzungsvorganges im ersten Schritt von der Polymerkette abgespalten werden und in die umgebende Atmosphäre entweichen. Die Anwendung in geschlossenen Räumen ist daher ohne Geruchsbelästigung und /oder arbeitshygienische Beeinträchtigung nur in begrenztem Umfange möglich.

Seit geraumer Zeit sind bereits wässrige Dispersionen auf der Basis von viskosen Silikonölen bekannt, die nach dem Verdampfen des Wassers aus der Dispersion durch Abspaltung von Wasser zu einem Elastomeren vernetzen können. Flüchtige, organische Verbindungen werden bei diesen wässrigen Systemen, insbesondere bei den Dispersionen auf Basis von hydroxylierten Silikonölen, nicht in nennenswertem Umfang freigesetzt. Ein weiterer Vorteil der wässrigen Zubereitungen ist ihre leichtere Verarbeitbarkeit.

Es ist beispielsweise bekannt, dass die Aufnahme von Vernetzungsmitteln (insbesondere kolloidale Kieselsäure, Alkalisilicat, Polyalkoxysilan, Polyalkenyloxysilan, Polyacyloxysilan, Polycetiminoxysilan, Polyamino- oder Polyamidosilan, Silikonat, Polysilicat, Silsesquioxanharz, reaktives hydroxyliertes, alkoxyliertes oder acyloxyliertes Silikonharz) in eine wäßrige Emulsion aus hydroxyliertem Silikonöl nach Einarbeitung von Füllstoffen und organometallischen Katalysatoren den Erhalt einer Dispersion erlaubt, die durch Wasserabspaltung zu einem Elastomeren vernetzen kann, siehe hierzu beispielsweise US-A-4 221 688; US-A-4 244 849; US-A-3 355 406; US-A-3 294 725; US-A-4 584 341; US-A-4 618 642; US-A-4 608 412; US-A-4 554 187; EP-A-266 729; EP-A-332 544; EP-A-304 719; EP-A-365 439; FR-A-2 642 765; FR-A-2 637 606; FR-A-2 638 166).

In den Schriften DE-A-2047919; DE-A-2157580; DE-A-2129987 und EP-A-169 098 wird vorgeschlagen, zum Erhalt einer wäßrigen Emulsion aus hydroxyliertem Silikonöl von einem bereits polymerisierten hydroxylierten Öl auszugehen und dies in eine wässrige Emulsion zu geben, indem man die Emulsionen durch ein anionisches und/oder nichtionisches grenzflächenaktives Mittel stabilisiert. Die herkömmlichen Verfahren (Einsatz von Vorrichtungen vom Typ Kugelmühle, Homogenisator) sind auf das Emulgieren von Polymeren mit einer Viskosität von kleiner als etwa 5000 mPas beschränkt; es gelingt jedoch unter Schwierigkeiten, viskosere Öle zu emulgieren, aber zum Nachteil der Körnung und somit der Stabilität der so erhaltenen Emulsion, wobei die Körnung sehr grob bleibt, sehr viel über 1 µm. Aus diesem Grund wird die eingesetzte reaktive Silikonölemulsion im Allgemeinen durch Emulsionspolymerisation von cyclischen oder linearen Oligomeren mit niedrigem Molekulargewicht, die gemäß klassischen Verfahren leicht zu emulgieren sind, erhalten, d.h., unter Verwendung eines anionischen grenzflächenaktiven Mittels, das auch bevorzugt die Rolle des Polymerisationskatalysators spielt (US-A-3 294 725; US-A-3 360 491).

Gemäß den Empfehlungen der US-A-4 608 412 sind dispergierte Polymere mit sehr hohen Molekulargewichten (MG > 200 000) zum Erhalt von Dichtstoffen mit guten mechanischen Eigenschaften, insbesondere Dehnung bei erhöhtem Bruch, vor und nach Lagerung der Dispersion in einer hermetisch abgeschlossenen Kartusche notwendig; gemäß diesem Verfahren werden die wäßrigen Dispersionen durch Emulsionspolymerisation in Gegenwart eines ionischen, häufig anionischen, grenzflächenaktiven Mittels erhalten, was der Stabilität des Dichtstoffes schadet und was seine Leistungsfähigkeiten vermindert, wie beispielsweise die mangelnde Adhäsion zu einer Reihe von im Baubereich anzutreffenden Substraten und unzureichende mechanischen Eigenschaften.

WO 94/09059 beschreibt wässrige Dispersionen enthaltend mindestens ein Organopolysiloxanöl, das durch Kondensation zu einem Elastomer vernetzbar ist, gegebenenfalls einen Vernetzer, ein Silan, einen mineralischen Füllstoff und eine katalytische Menge an einer Härtungsverbindung. Diese Dispersionen werden durch Kneten einer Silikonölphase mit einer Viskosität von mindestens 3 Pas erzeugt, wobei diese Silikonölphase das vernetzbare Organopolysiloxanöl und gegebenenfalls das Vernetzungsmittel, das Silan, den Füllstoff und das Härtungsmittel enthält. Zusätzlich enthält die Mischung eine wässrige Phase enthaltend Wasser und mindestens einen Emulgator. Das Gewichtsverhältnis von Wasser zu Wasser plus Emulgator wird dabei so gewählt, dass die Viskosität der wässrigen Phase mindestens so hoch ist wie die Viskosität der Silikonölphase. Diese Mischung soll mit ausreichender Scherung so lange geknetet werden, bis eine Öl-in-Wasser-Emulsion mit einer Teilchengröße von 0,1 bis 5 µm entsteht. Gegebenenfalls kann anschließend diese Emulsion mit Wasser bis zu einem Festkörpergehalt von 25 bis 97 % verdünnt werden. Diese Dispersionen sollen sich zur Herstellung von elastomeren Anstrichen, Wasser abstoßenden Mitteln für Fassaden, Abdichtungsmitteln und / oder Feuer hemmenden elastomeren Produkten eignen.

EP 0 410 899 offenbart eine wässrige Silikonöldispersion enthaltend eine Öl-in-Wasser-Emulsion eines a,ω-Dihydroxypolysiloxans, das mit mindestens einem anionischen oder nicht ionischen Emulgator stabilisiert ist, eine wässrige Dispersion eines organischen (Co)Polymers mit einer Teilchengröße zwischen 0,01 und 0,5 µm und einem Feststoffgehalt zwischen 20 % und 70 % (Gewicht), einen Vernetzer, mindestens einen nicht silikatischen Füllstoff und gegebenenfalls einen Metallkatalysator. Diese Silikondispersion soll einen Feststoffgehalt von mindestens 40 Gew.-% haben. Die Schrift schlägt vor, dass diese Dispersionen in kosmetischen Zusammensetzungen für Haare verwendbar sind, insbesondere sollen sie die Dauerhaftigkeit eines auf den Haaren erzeugten porösen Elastomerfilmes erhöhen.

Aus WO 93/15159 sind Haftklebstoffzusammensetzungen bekannt, die einen haftklebrigen Acrylatklebstoff enthalten. Als Additiv soll dieser Klebstoff etwa 2 bis 10 Gew.-% (bezogen auf die Trockensubstanz) eines Polydimethylsiloxans mit einem zahlenmittleren Molekulargewicht zwischen 1.300 und 15.000 enthalten. Dieser Polysiloxanzusatz soll die Schneideeigenschaften des Haftklebstoffs verbessern und insbesondere das Zerfließen der Schnittkanten verhindern.

Die Schrift DE 29919310 U1 beschreibt Mittel, die zum Wasser abweisenden Behandeln von Oberflächen geeignet sind. Diese enthalten mindestens zwei Silikonöle verschiedener Viskosität und eine Acrylsäureester-Dispersion und ein aliphatisch/aromatisches Kohlenwasserstoffgemisch aus C₁₀ bis C₁₂-Kohlenwasserstoffen. Die Mittel sollen zum Behandeln von Glasflächen dienen, um diese Wasser abweisend auszurüsten und eine Verbesserung der Transparenz zu bewirken, so dass die betreffende Scheibe klarer und gleichsam durchsichtiger wirkt.

Es besteht also weiterhin Bedarf an wasserbasierten Silikon-Dichtstoffen, die voll zufriedenstellende mechanische Eigenschaften aufweisen. Insbesondere sollen sie auf einer Vielzahl von Substraten, wie sie im Baubereich vorkommen - insbesondere auf Kunststoffoberflächen -, gute Haftung aufweisen.

Aufgabe der vorliegenden Erfindung ist es daher, neue wasserbasierte Silikonöl-Zubereitungen bereitzustellen, die zu Elastomeren mit hoher Elastizität aushärten und ein gutes Haftungsspektrum aufweisen. Ferner ist eine anwenderfreundliche Härtungszeit bei der Anwendung erwünscht.

Der Gegenstand der vorliegenden Erfindung ist den Patentansprüchen zu entnehmen, er besteht in der Bereitstellung einer härtbaren Zusammensetzung, enthaltend
a) mindestens ein Hydroxylgruppen und/oder hydrolysierbare Gruppen enthaltendes Organopolysiloxan in wässriger Dispersion,
b) mindestens ein Organopolysiloxan mit einer dynamischen Viskosität von 0,05 bis 7, beispielsweise 0,2 bis 7, Pa.s (gemessen nach Brookfield DV-II+, Spindel 3, 23° C), das frei von Hydroxylgruppen und/oder hydrolysierbaren Gruppen ist, in wässriger Dispersion,
c) mindestens ein Vernetzungsmittel,
d) mindestens einen Emulgator,
e) mindestens einen Vernetzungskatalysator,
f) mindestens eine wässrige siliziumfreie Polyurethandispersion,
g) mindestens einen Füllstoff,
h) ggf. Wasser.

Ein Zusatz von Wasser zu einer erfindungsgemäßen Zusammensetzung über die in den eingesetzten Dispersionen enthaltene Wassermenge hinaus ist möglich, aber nicht zwingend erforderlich.

Der Gegenstand der vorliegenden Erfindung stellt im Wesentlichen eine wässrige Dispersion von Siliconölen, enthaltend:
a) mindestens ein Hydroxylgruppen oder hydrolysierbare Gruppen enthaltendes Organopolysiloxan,
b) mindestens ein niederviskoses Organopolysiloxan, frei von Hydroxylgruppen oder hydrolysierbaren Gruppen,
c) ein Vernetzungsmittel,
d) mindestens einen Emulgator,
e) mindestens einen Vernetzungskatalysator,
f) mindestens eine wässrige siliziumfreie Polyurethandispersion,
g) mindestens einen Füllstoff,
h) Wasser,
   dar.

Ein weiterer Gegenstand der vorliegenden Erfindung ist die Verwendung einer Zusammensetzung der oben genannten Art als härtbarer Kleb- oder Dichtstoff oder Beschichtungsmittel mit verbesserten Haftungseigenschaften.

Das Hydroxylgruppen und/oder hydrolysierbare Gruppen enthaltende Organopolysiloxan ist vorzugsweise ein a,ω-funktionelles Organopolysiloxan, das pro Molekül mindestens zwei funktionelle Gruppen aufweist, die, gegebenenfalls nach Hydrolyse, kondensierbar sind.

Derartige Organopolysiloxane können durch die allgemeine Formel (1) dargestellt werden. 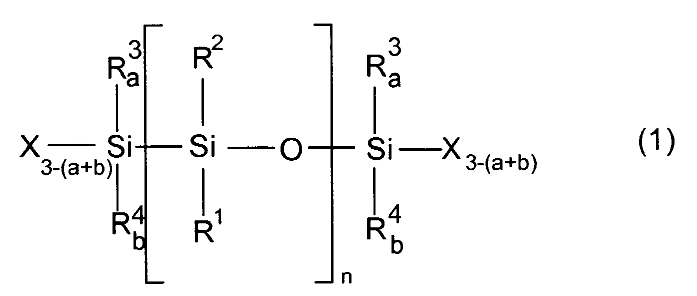 In Formel (1) ist
- a=0 oder 1,
- b = 0 oder 1,
- mit a+b=0; 1 oder 2;
- n besitzt einen ausreichenden Wert, um dem Polymeren der Formel (1) die gewünschte Viskosität zu verleihen, vorzugsweise ist n = 500 - 10.000 bzw. 750 - 10.000, besonders bevorzugt 1.100 - 6.000, insbesondere 1.500 - 2.000;
- die Reste X sind identisch oder verschieden und bedeuten
   - eine OH-Gruppe mit a + b = 2,
   - einen Alkoxy- oder Alkenyloxyrest mit 1 bis 10 Kohlenstoffatomen,
   - einen Aryloxyrest mit 6 bis 13 Kohlenstoffatomen,
   - einen Acyloxyrest mit 1 bis 13 Kohlenstoffatomen,
   - eine Ketiminoxygruppe mit 1 bis 8 Kohlenstoffatomen oder
   - eine funktionelle Amino- oder Amidogruppe mit 1 bis 6 Kohlenstoffatomen, die an das Silizium durch eine Si-N-Bindung gebunden ist;
- die Reste R¹ und R² sind gleich oder verschieden und bedeuten organische aliphatische Alkyl- oder Alkenylreste mit 1 bis 10 Kohlenstoffatomen oder aromatische Reste, insbesondere Phenylreste, wobei diese Reste gegebenenfalls durch Halogenatome oder Cyanogruppen substituiert sind, wobei bevorzugt mindestens 80% der Reste Methylgruppen sind;
- die Reste R³ und R⁴ sind gleich oder verschieden und bedeuten organische aliphatische Alkyl-, Aminoalkyl-, Polyaminoalkyl-, Epoxyalkyl-, Alkenylreste mit 1 bis 13 Kohlenstoffatomen, aromatische Arylreste mit 6 bis 13 Kohlenstoffatomen;
   wobei mindestens 2 und bevorzugt mindestens 3 gegebenenfalls nach Hydrolyse kondensierbare funktionelle Gruppen pro Molekül vorhanden sind und bevorzugt mindestens 80% der Reste R¹ bis R⁴ eine Methylgruppe bedeuten.

Als Beispiele für den Rest X können die folgenden Gruppen genannt werden:
- Alkoxy, wie beispielsweise Methoxy, Ethoxy, Octyloxy,
- Alkenyloxyl, wie beispielsweise Vinyloxy, Hexenyloxy, Isopropenyloxy,
- Aryloxy, wie beispielsweise Phenyloxy,
- Acyloxy, wie beispielsweise Acetoxy,
- Ketiminoxy, wie beispielsweise ON=C(CH₃)C₂H₅,
- Aminoderivate, wie beispielsweise Ethylamino, Phenylamino,
- Amidoderivate, wie beispielsweise Methylacetamido.

Als organische aliphatische oder aromatische Reste können genannt werden:
- für R¹, R² beispielsweise die Gruppen Methyl, Ethyl, Octyl, Trifluorpropyl, Vinyl, Phenyl;
- für R³, R⁴: beispielsweise die Gruppen Methyl, Ethyl, Octyl, Vinyl, Allyl, Phenyl; -(CH₂)₃-NH₂; - (CH₂)₃-NH-(CH₂)₂-NH₂.

In einer bevorzugten Ausführungsform der erfindungsgemäßen härtbaren Zusammensetzung ist/sind das/die Hydroxylgruppen und/oder hydrolysierbare Gruppen enthaltende(n) Organopolysiloxan(e) an beiden Kettenenden mit je einer Hydroxylgruppe funktionalisiert und enthält/enthalten keine weiteren Hydroxylgruppen und hydrolysierbaren Gruppen. Derartige OH-terminierte Organopolysiloxane sind besonders vorteilhaft, weil sie direkt miteinander kondensiert werden können. Bei der Aushärtung ist somit kein Hydrolyseschritt erforderlich, aus dem die Freisetzung der hydrolysierbaren Gruppen und eine damit verbundene Geruchsbelästigung und/oder arbeitshygienische Beeinträchtigung resultiert. Durch die Kondensation wird lediglich Wasser freigesetzt.

Das oder die Hydroxylgruppen und/oder hydrolysierbare Gruppen enthaltende(n) Organopolysiloxan(e) der Formel (1) hat/haben eine dynamische Viskosität von 35 bis 1000 Pa.s, bevorzugt von 50 bis 1000 Pa.s, vorzugsweise von 75 bis 500 Pa.s, insbesondere 100 bis 160 Pa.s (gemessen nach Brookfield DV-II+, Spindel 3, 23° C bei einem Schergradienten von 1 s⁻¹).

Das niederviskose Organopolysiloxan, das frei von Hydroxylgruppen ist, kann durch die folgende Formel (2) dargestellt werden.

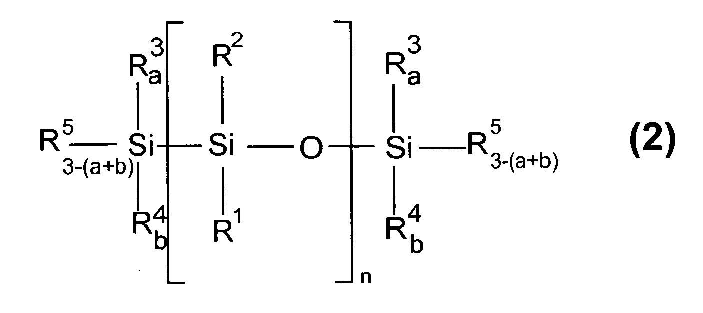

Hierin haben die Reste R¹ bis R⁴ die gleiche Bedeutung wie weiter oben zur Formel (1) ausgeführt, R⁵ kann die gleiche Bedeutung haben wie R¹ bzw. R². Besonders bevorzugt sind niederviskose Organopolysiloxane, bei denen mindestens 80 % der Reste R¹ bis R⁵ eine Methylgruppe bedeutet. n ist eine Zahl von 3 bis 100, bevorzugt 5 bis 50, insbesondere 8 bis 15.

Das niederviskose Organopolysiloxan hat vorzugsweise bei 23°C eine dynamische Viskosität von 0,05 bis 7 Pa.s, beispielsweise 0,2 bis 7 Pa.s, bevorzugt 0,4 bis 3,5 Pa.s, insbesondere von 0,5 bis 1,5 Pa.s. Dabei werden die hier genannten dynamischen Viskositäten üblicherweise mit Rotationsviskosimetern gemessen, beispielsweise mit einem Brookfield RVP-Viskosimeter. Die Menge an in der Zusammensetzung verwendetem niederviskosem Organopolysiloxan kann in weiten Grenzen variiert werden, vorzugsweise werden auf 100 Gewichtsteile bzw. Teile hydroxlgruppenhaltiges oder hydrolisierbare Gruppen enthaltendes Organopolysiloxan 1 bis 30 Gewichtsteile bzw. Teile niederviskoses Organopolysiloxan zugesetzt.

In Silikon-Dichtstoffen einsetzbare Vernetzungsmittel sind an sich bekannt, als konkrete und bevorzugte Beispiele für zu verwendende Vernetzungsmittel seien genannt: kolloidale Kieselsäure, Natriumsilicat, pyrogene oder gefällte Kieselsäure, Alkalimetallorganosilikate, Mikroemulsionen eines Silsesquioxanharzes, reaktive Silikonharze mit geringem Molekulargewicht, insbesondere einem Molekulargewicht von 1000 - 4000, mit Alkoxy- und/oder Acyloxygruppen, Silikonharze mit hohem Molekulargewicht (in Toluol unlöslich), insbesondere mit einem Molekulargewicht von mehr als 4000 - 10000, hydroxylierte Silikonharze, Alkoxysilane, Alkylaminosilane, Alkylamidosilane. Es können auch Mischungen der vorgenannten Vernetzungsmittel verwendet werden. Auf 100 Gewichtsteile Organopolysiloxan oder Mischung von Organopolysiloxanen werden 0,1 bis 100 Gewichtsteile Vernetzer eingesetzt.

Das zur Herstellung der erfindungsgemäßen Zusammensetzung zu verwendende oberflächenaktive Mittel (Emulgator) kann prinzipiell ein anionischer, kationischer oder nicht ionischer Emulgator sein. Typischerweise und auch im Rahmen der vorliegenden Erfindung bevorzugt ist jedoch der Emulgator ein nicht ionischer Emulgator. Vorzugsweise weist der Emulgator oder das Gemisch von Emulgatoren einen HLB-Wert (Hydrophilic Lipophilic Balance) von 8 bis 15 auf. Bevorzugte nicht ionische Emulgatoren sind Ethoxylierungsprodukte von langkettigen Fettalkoholen, Alkoxylierungsprodukte von Alkylphenolen oder es können auch Blockcopolymere von Polypropylenoxid/Polyethylenoxid Verwendung finden. Weitere Beispiele für geeignete Emulgatoren sind Alkylglycoside, Alkylpolyglycoside, polyalkoxylierte Fettamide, Zuckerether oder Zuckerester. Gegebenenfalls können auch Mischungen von mehreren der vorgenannten Emulgatoren eingesetzt werden. Die Emulgatoren werden in Mengen von 1 bis 20 Gewichtsteilen auf 100 Gewichtsteile Organopolysiloxan oder Organopolysiloxan-Mischung verwendet.

Als Härtungs- bzw. Vernetzungskatalysatoren können eine Vielzahl von in der Silanchemie üblichen Katalysatoren eingesetzt werden, vorzugsweise sind es Carbonsäuresalze von Blei, Zink, Zirkonium, Titan, Eisen, Barium, Calcium, Mangan und insbesondere von Zinn. Es können auch Chelatverbindungen wie beispielsweise Dicarbonylchelate der vorgenannten Metalle eingesetzt werden. Bei den Zinnverbindungen können insbesondere auch die Diorganozinndicarboxylate, wie z.B. Dibutylzinndilaurat (DBTL), Dioctylzinndilaurat, Dibutylzinndiacetat oder Dioctylzinndiacetat eingesetzt werden. Typische Mengenbereiche für die zu verwendenden Vernetzungskatalysatoren sind 0,01 bis 3 Gewichtsteile des Vernetzungskatalysators auf 100 Gewichtsteile Organopolysiloxan oder Organopolysiloxane.

Ein wesentlicher Bestandteil der erfindungsgemäßen Zusammensetzung ist mindestens eine wässrige siliziumfreie Polyurethandispersion. Wässrige Dispersion(en) kann/können aus Polyacrylaten, Polymethacrylaten sowie Acrylat/Methacrylatcopolymeren, Polystyrol, Styrolcopolymeren - insbesondere mit Acrylaten oder Methacrylaten -, Vinylacetatpolymeren oder Copolymeren des Vinylacetats - insbesondere mit Ethylen und/oder Acrylaten oder Styrol - und Polyolefinen ausgewählt werden. Es ist auch möglich, Mischungen von siliziumfreien Polymerdispersionen einzusetzen. Der Zusatz derartiger Dispersionen trägt zur Verbreiterung des Haftungsspektrums bei und verbessert die Haftung der Zusammensetzung insbesondere auf Kunststoffen.

Die erfindungsgemäße härtbare Zusammensetzung enthält eine wässrige siliziumfreie Polyurethandispersion. Eine derartige Dispersion bewirkt in besonders hohem Maße eine Verbesserung der Haftung auf Kunststoffen, insbesondere im Vergleich zu Acrylat- bzw. Styrolacrylat- und zu Vinylacetat-Copolymer-Dispersionen.

Die Herstellung der wässrigen Polyurethandispersion erfolgt nach an sich bekannten Verfahren. Dabei wird üblicherweise zunächst ein NCO-terminiertes Prepolymer durch Umsetzung von bi- oder polyfunktionellen Alkoholen (Polyolen) mit Di- oder Polyisocyanaten hergestellt. Diese können dann gegebenenfalls durch Kettenverlängerung, z. B. mit Diaminen, zu hochmolekularen Polyurethanen weiter umgesetzt werden. Damit eine in Wasser selbst emulgierende Polyurethandispersion entsteht, werden hydrophile Gruppen, z. B. anionische Carboxy- oder Sulfonsäuregruppen oder auch kationische Gruppen, in das Molekül eingebaut. Diese Polyurethane können aus Viskositätsgründen zunächst in inerten organischen Lösungsmitteln hergestellt werden. Das Lösungsmittel oder Lösungsmittelgemisch wird in diesem Falle nach dem Dispergierungsschritt in der wässrigen Phase durch Destillation aus der Emulsion entfernt.

In einer weiteren bevorzugten Ausführungsform der erfindungsgemäßen härtbaren Zusammensetzung ist das Polyurethanpolymer aus Polyetherpolyolen, Polyesterpolyolen, aminoterminierten Polyoxyalkylenen und/oder hydroxyfunktionellen Polyolefinen sowie Di- bzw. Polyisocyanaten und Dihydroxycarbonsäuren aufgebaut.

Als Isocyanate können im Prinzip alle technisch verfügbaren aromatischen, aliphatischen oder cycloaliphatischen Di- oder Polyisocyanate eingesetzt werden. Besonders bevorzugt sind jedoch die folgenden aliphatischen bzw. cycloaliphatischen Diisocyanate:
4,4'-Dicyclohexylmethandiisocyanat (H₁₂MDI), 1-Isocyanatomethyl-3-Isocyanato-1,5,5-Trimethyl-cyclohexan (Isophoron-diisocyanat, IPDI), Cyclohexan-1,4-diisocyanat, hydriertes Xylylen-diisocyanat (H₆XDI), 1-Methyl-2,4-diisocyanato-cyclohexan, m- oder p-Tetramethylxylendiisocyanat (m-TMXDI, p-TMXDI), Dimerfettsäure-Diisocyanat, Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan, Butan-1,4-Diisocyanat sowie 1,12-Dodecandiisocyanat (C₁₂DI). Gegebenenfalls können auch die entsprechenden trimeren Biuretisierungs- bzw. Isocyanuratisierungs-Produkte der vorgenannten Diisocyanate verwendet werden.

Als Polyole kommen Polyetherpolyole, Polyalkylendiole, Polyesterpolyole zum Einsatz. Als Polyetherpolyole finden dabei die an sich bekannten Polypropylenglycole oder Polybutylenglycole Verwendung. Beispiele sind di- und/oder trifunktionelle Polypropylenglycole mit zwei bzw. drei Hydroxylgruppen pro Molekül im Molekulargewichts-Bereich von 400 bis 20000, vorzugsweise im Bereich von 1000 bis 6000. Es können auch statistische und/oder Blockcopolymere des Ethylenoxids und Propylenoxids eingesetzt werden. Eine weitere Gruppe von vorzugsweise einzusetzenden Polyethern sind die Polytetramethylenglycole (Polybutylenglycole, Poly(oxytetramethylen)glycol, Poly-THF) mit einem Molekulargewichts-Bereich der Polytetramethylenglycole zwischen 600 und 6000.

Als Polyesterpolyole sind solche geeignet, die durch Kondensation von Di- bzw. Tricarbonsäuren, wie z.B. Adipinsäure, Sebacinsäure, Glutarsäure, Azelainsäure, Korksäure, Undecandisäure, Dodecandisäure, 3,3-Dimethylglutarsäure, Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-Dodecandiol, Dimerfettalkohol, Glycerin, Trimethylolpropan oder deren Mischungen hergestellt werden können. Eine weitere Gruppe Polyole sind die Polyester auf der Basis von ε-Caprolacton, auch "Polycaprolactone" genannt.
Es können aber auch Polyesterpolyole oleochemischer Herkunft eingesetzt werden. Derartige Polyesterpolyole können beispielsweise durch vollständige Ringöffnung von epoxidierten Triglyceriden eines wenigstens teilweise olefinisch ungesättigte Fettsäuren enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Cognis) sowie Rizinusöl und dessen Derivate, wie z.B. partiell dehydratisiertes Ricinusöl.

Als hydrophile Gruppen können kationische Gruppen in Form von Polyaminen in das Polyurethanmolekül eingebaut werden, bevorzugt weist die Polyurethandispersion jedoch anionische Gruppen, insbesondere Sulfonsäuregruppen und besonders bevorzugt Carboxylgruppen, auf. Geeignete Carbonsäuren zum Einbau in das Polyurethangerüst sind Dihydroxycarbonsäuren wie Dihydroxypropansäure, Dihdroxysoxinsäure, Dihydroxybenzoesäure oder auch α,α-Dimethylolalkansäuren wie z. B. 2,2-Dimethylolessigsäure, 2,2-Dimethylolpropionsäure, 2,2-Dimethlylolbuttersäure und 2,2-Dimethylolpentansäure. Zur Emulgierung bzw. Dispergierung des carboxylierten Polyurethans in der wässrigen Phase werden die Carboxylgruppen mit einem Neutralisationsmittel neutralisiert, hierzu werden vorzugsweise tertiäre Amine eingesetzt wie Trimethylamin, Triethylamin, Tributylamin, Diethylanilin, Triphenylamin, Dimethylethanolamin, Diethylethanolamin, Methyldiethanolamin oder Triethanolamin. Dabei kann der Neutralisationsschritt sowohl in der organischen Phase als auch in der wässrigen Phase vorgenommen werden. Es ist auch möglich, kommerziell erhältliche Polyurethan-Dispersionen für die erfindungsgemäßen Dichtstoff- Zubereitungen zu verwenden, Beispiele hierfür sind U-5200VP oder U-350VP der Firma Alberdingk-Boley.

Die wässrigen siliziumfreien Polymerdispersionen werden in Mengen von 0,01 bis 50 Gewichtsteilen, vorzugsweise 15 bis 40 oder beispielsweise auch 0,5 bis 10 Gewichtsteilen der Polymerdispersion, bezogen auf 100 Gewichtsteile Organopolysiloxan bzw. Organopolysiloxanöl oder Organopolysiloxan-Mischung, eingesetzt.

Als Füllstoffe können siliziumhaltige (verstärkende) Füllstoffe verwendet werden, und zwar in dem Umfang, in dem die siliziumhaltigen Zusatzstoffe nicht bereits als Vernetzungsmittel eingesetzt wurden. Beispiele hierfür sind kolloidale Kieselsäure, pyrogene Kieselsäure, Fällungskieselsäure. Beispiele für halbverstärkende Füllstoffe sind Diatomenerde, gemahlener Quarz und Cristobalit. Beispiele für silikatfreie Füllstoffe sind natürliches, gemahlenes oder gefälltes Calciumcarbonat, hydratisiertes Aluminiumoxid, Magnesiumhydroxid, Ruß, Titandioxid, Aluminiumoxid, Glimmer, Zinkoxid, Talkum, Eisenoxid, Bariumsulfat, gelöschter Kalk oder Mischungen dieser Füllstoffe. Die Füllstoffe, insbesondere die Kreiden (Calciumcarbonate), können gegebenenfalls oberflächenbehandelt ("gecoatet") sein. Die mittlere Teilchengröße dieser Füllstoffe soll im Bereich zwischen 0,001 bis 300 µm liegen. Die Füllstoffe werden in Mengen von 50 bis 400 Gewichtsteilen Füllstoff, bezogen auf 100 Gewichtsteile Organopolysiloxanöl oder Organopolysiloxan-Mischung, verwendet.

In einer weiteren bevorzugten Ausführungsform der erfindungsgemäßen härtbaren Zusammensetzung enthält die Zusammensetzung zusätzlich mindestens ein organofunktionelles Silan. Derartige Silane werden bevorzugt als Haftvermittler eingesetzt. Unter einem Haftvermittler wird eine Substanz verstanden, die die Haftungseigenschaften von Klebeschichten auf Oberflächen verbessert.

Beispiele für organofunktionelle Silane sind das 3-Isocyanatopropyltriethoxysilan, das 3-Isocyanatopropyltrimethoxysilan, 3-(2,3-epoxypropoxy)propyltrimethoxysilan, 3-(2,3-epoxypropoxy)propyltriethoxysilan, 3-(2,3-epoxypropoxy)propyldiethoxymethylsilan, 3-(2,3-epoxypropoxy)propylethoxydimethylsilan, 3-Mercaptopropyltrimethoxysilan, 3-Mercaptopropyltriethoxysilan, 3-Mercaptopropyldiethoxymethylsilan, 3-Mercaptopropylethoxydimethylsilan sowie Mischungen der vorgenannten Silane. Weiterhin können Oligomere der vorgenannten Silane verwendet werden, Beispiele hierfür sind Dynasylan® 1146, Dynasylan® 6490, Dynasylan® 6498, Dynasylan® 6598, Dynasylan® 9896 , Dynasylan® HYDROSIL 1151, Dynasylan® HYDROSIL 2627, Dynasylan® HYDROSIL 2776, Dynasylan® HYDROSIL 2909 oder Dynasylan® HYDROSIL 2926 der Fa. EvoniK. Die Menge der haftungsvermittelnden oder haftungsverstärkenden organofunktionellen Silane richtet sich dabei nach den zu verklebenden Substraten, sie werden vorzugsweise in Mengen kleiner als 5, besonders bevorzugt kleiner als 2 Gew. %, bezogen auf die Gesamtzusammensetzung der Dichtstoffdispersion, eingesetzt.

Als weitere übliche Hilfs- und Zusatzstoffe können die erfindungsgemäßen Zusammensetzungen klebrigmachende Harze, weitere haftvermittelnde Zusätze, Pigmente, Weichmacher und / oder Stabilisatoren Katalysatoren oder deren Mischungen in Mengen von 0 bis 50 Gewichtsteilen auf 100 Gewichtsteile Organopolysiloxan bzw. Organopolysiloxanöl oder Organopolysiloxan bzw. Organopolysiloxanöl-Mischung enthalten.

Die Menge an zur erfindungsgemäßen Zubereitung bzw. Zusammensetzung zugesetztem Wasser richtet sich nach dem Wassergehalt der eingesetzten Organopolysiloxanöl- Dispersion und / oder siliziumfreien Polymerdispersion sowie nach den erforderlichen rheologischen Eigenschaften der Zusammensetzung. Typischerweise enthält sie 1 bis 30 Gewichtsteile, vorzugsweise 2 bis 20 Gewichtsteile Wasser, bezogen auf 100 Gewichtsteile Organopolysiloxanöl oder Organopolysiloxanöl- Mischung.

In einer weiteren bevorzugten Ausführungsform der erfindungsgemäßen härtbaren Zusammensetzung enthält die Zusammensetzung auf 100 Gewichtsteile Organopolysiloxan oder Organopolysiloxan-Mischung bzw. auf 100 Gewichtsteile Organopolysiloxanöl oder Organopolysiloxanöl-Mischung
a) 0,1 bis 100 Gewichtsteile mindestens eines Vernetzungsmittels,
b) 1 bis 20 Gewichtsteile eines nichtionischen Emulgators oder einer Mischung von Emulgatoren,
c) 0,001 bis 3, vorzugsweise 0,01 bis 3, Gewichtsteile eines Vernetzungskatalysators oder einer Katalysatormischung,
d) 0,01 bis 50 Gewichtsteile, vorzugsweise 15 bis 40 oder auch 0,5 bis 10 Gewichtsteile mindestens einer wässrigen Polyurethandispersion,
e) 50 bis 400 Gewichtsteile mindestens eines Füllstoffs,
f) 1 bis 50 Gewichtsteile, vorzugsweise 2 bis 20 Gewichtsteile Wasser,
g) 0 bis 50 Gewichtsteile weiterer Hilfs- und Zusatzstoffe.

Die erfindungsgemäßen Zusammensetzungen können in an sich bekannter Weise in Mischaggregaten mit hoher Scherwirkung hergestellt werden, hierzu gehören z.B. Kneter, Planetenmischer, Innenmischer, sogenannte "Banburymischer", Doppelschneckenextruder und ähnliche dem Fachmann bekannte Mischaggregate.

Gegenüber den bisher bekannten Dichtstoffen, Klebstoffen oder Beschichtungsmitteln auf Basis wässriger Organopolysiloxan-Dispersionen zeichnen sich die erfindungsgemäßen Zusammensetzungen besonders durch eine verbesserte Haftung auf einer Vielzahl von Substraten aus, insbesondere auf den im Sanitär- und Küchenbereich vorzufindenden Kunststoffoberflächen.

In den nachfolgenden Ausführungsbeispielen soll die Erfindung näher erläutert werden, wobei die Auswahl der Beispiele keine Beschränkung des Umfangs des Erfindungsgegenstandes darstellen soll.

### Beispiele

### Beispiel für die Herstellung der Silikon-Emulsion (Grundemulsion)

372g α,ω-dihydroxyliertes Polydimethylsiloxan (Bluestar Rhodorsil 48V135000), 28g niederviskoses Polydimethylsiloxan, 4g Silikonharz (Bluestar Resine 4509) und 28g einer 85%igen wässrigen Lösung ethoxylierter Fettalkohole werden in 8,5g Wasser emulgiert. Nachfolgend werden weitere 60g Wasser, 9g Titandioxid und 400g Kreide unter stetem Rühren in die Emulsion eingearbeitet.

### Beispiel für die Herstellung der Latex-additivierten Zusammensetzung (erfindungsgemäße Zusammensetzung)

180g Grundemulsion und 20g Latexdispersion werden miteinander emulgiert. Es werden 4,7 Silanemulsion (γ-Aminopropyltrihydroxysilan) und 0,25g Katalysatoremulsion (Dioctylzinnlaurat) zugegeben. Abschließend wird das fertige Produkt in eine Kartusche gefüllt. Nach ca. einwöchiger Reifezeit ist das Produkt anwendungsbereit.

Für die nachfolgend aufgeführten Versuche wurden sämtliche Dispersionen - ggf. durch Verdünnen mit Wasser- auf einen Festkörperanteil von 40% eingestellt. Die Erhöhung der Schälkraft wurde relativ zur Schälkraft der Grundemulsion mit eingearbeiteter Silan- und Katalysatoremulsion gemessen. Es wurde eine Raupe mit einem Durchmesser von ca. 0,5 - 1 cm auf dem Substrat aufgetragen, die innerhalb einer Woche unter kontrollierten klimatischen Bedingungen (23°C und 50% Luftfeuchte) ausgehärtet wurde. Die Messung der Schälkraft erfolgte mit einer Zug-Dehnungs-Maschine (Zwick Z010) durch Abziehen der Raupe in einem Winkel von 90° zur Substratoberfläche. Auf glasierten Fliesen und Glas wurde für sämtliche aufgeführten erfindungsgemäßen Zusammensetzungen ebenso wie für die Referenzzusammensetzung ein kohäsives Bruchbild beobachtet. Die Ergebnisse sind in Tabelle 1 aufgeführt.

**Tabelle 1**

| Nr. | Massenanteil Grundemulsion (%) | Massenanteil Polymerdispersion (%) | Art der Polymerdispersion | Oberflächenmaterial | Erhöhung der Schälkraft (%) |
|---|---|---|---|---|---|
| 1 | 90 | 10 | Polyurethan (U 350 VP)¹ | Polycarbonat | 300 |
| 2 | 90 | 10 | Polyurethan (U 5200 VP)¹ | Polyester | 200 |
| 3 | 95 | 5 | Polyurethan² | Polycarbonat, | 150 |
| | | | | Poly(vinylchlorid), | |
| | | | | Poly(methylmethacrylat) | |
| 4 | 90 | 10 | Polyurethan² | Poly(methylmethacrylat) | 200 |
| 5 | 90 | 10 | Polyurethan (U 3251)¹ | Poly(methylmethacrylat) | 300 |
| 6 * | 90 | 10 | Acrylat (Acronal 81D)³ | Poly(methylmethacrylat) | 100 |
| 7 * | 90 | 10 | Acrylat (Primal 3362)⁴ | Poly(methylmethacrylat) | 100 |
| 8 * | 90 | 10 | Styrol-Acrylat (Acronal 290D)³ | Poly(methylmethacrylat) | 25 |
| 9 * | 90 | 10 | Styrol-Acrylat (Rhoximat DS 910 / Axilat DS 910)⁵ | Poly(methylmethacrylat) | 25 |
| 10 * 90 | | 10 | Vinylacetat-Ethylen-Copolymer | Poly(methylmethacrylat) | 25 |

| | | | | | |
|---|---|---|---|---|---|
| ¹ Hersteller: Alberdingk-Boley; ² Herstellung: Ein Polyurethanprepolymer wird nach den bekannten Verfahren aus 19,4g Poly(THF) (M_{w} 1000 g/mol), 3,2g Dimethylolpropionsäure und 12,6g TMXDI hergestellt und dann in 64g Wasser dispergiert.; ³ Hersteller: BASF; ⁴ Hersteller: Rohm & Haas; ⁵ Hersteller: Rhodia/Hexion Speciality Chemicals * nicht erfindungsgemäß | | | | | |

Die Ergebnisse beweisen, dass der Zusatz von Polymerdispersionen zu einer signifikanten Verbesserung der Haftung der Zusammensetzungen auf Kunststoffoberflächen führt. Besonders gute Ergebnisse werden mit Polyurethandispersionen erreicht.

Darüber hinaus wurden mechanische Parameter für die Zusammensetzung des Beispiels 5 in Abhängigkeit vom Massenanteil der Polymerdispersion bestimmt, die in Tabelle 2 enthalten sind.

**Tabelle 2**

| Nr. | Massenanteil Grundemulsion | Massenanteil Latex | Bruchdehnung (%) | Bruchkraft (N/mm²) | Modul bei 100% Dehnung |
|---|---|---|---|---|---|
| 5a (nicht erfindungsgemäß) | 100 | 0 | 580 | 0,28 | 0,12 |
| 5b | 90 | 1 | 600 | 0,29 | 0,12 |
| 5c | 95 | 2 | 700 | 0,30 | 0,10 |
| 5d | 90 | 3 | 750 | 0,33 | 0,12 |
| 5e | 90 | 5 | 810 | 0,30 | 0,10 |
| 5f | 90 | 10 | 840 | 0,24 | 0,08 |

## Patentansprüche

1. Härtbare Zusammensetzung, enthaltend
a) mindestens ein Hydroxylgruppen und/oder hydrolysierbare Gruppen enthaltendes Organopolysiloxan in wässriger Dispersion
b) mindestens ein Organopolysiloxan mit einer dynamischen Viskosität von 0,05 bis 7 Pa.s (gemessen nach Brookfield DV-II+, Spindel 3, 23° C), das frei von Hydroxylgruppen und/oder hydrolysierbaren Gruppen ist, in wässriger Dispersion
c) mindestens ein Vernetzungsmittel,
d) mindestens einen Emulgator,
e) mindestens einen Vernetzungskatalysator,
f) mindestens eine wässrige siliziumfreie Polyurethandispersion,
g) mindestens einen Füllstoff,
h) ggf. Wasser.

2. Härtbare Zusammensetzung nach Anspruch 1, **dadurch gekennzeichnet, dass** das Hydroxylgruppen und/oder hydrolysierbare Gruppen enthaltende Organopolysiloxan an beiden Kettenenden mit je einer Hydroxylgruppe funktionalisiert ist und keine weiteren Hydroxylgruppen und hydrolysierbaren Gruppen enthält.

3. Härtbare Zusammensetzung nach Anspruch 1 oder 2, **dadurch gekennzeichnet, dass** die Zusammensetzung zusätzlich mindestens ein organofunktionelles Silan enthält.

4. Härtbare Zusammensätzung nach mindestens einem der Ansprüche 1 bis 3, **dadurch gekennzeichnet, dass** das Vernetzungsmittel ausgewählt wird aus kolloidaler Kieselsäure, Natriumsilicat, pyrogener oder gefällter Kieselsäure, Alkalimetallorganosilikaten, Mikroemulsionen eines Silsesquioxanharzes, reaktiven Silikonharzen mit einem Molekulargewicht von 1000 - 4000 mit Alkoxy- und/oder Acyloxygruppen, Silikonharzen mit einem Molekulargewicht von mehr als 4000 - 10000, hydroxylierten Silikonharzen, Alkoxysilanen, Alkylaminosilanen, Alkylamidosilanen oder deren Mischungen.

5. Härtbare Zusammensetzung nach mindestens einem der Ansprüche 1 bis 4, **dadurch gekennzeichnet, dass** der Emulgator ein nicht ionischer Emulgator ist.

6. Härtbare Zusammensetzung nach mindestens einem der Ansprüche 1 bis 5, **dadurch gekennzeichnet, dass** der Emulgator oder das Gemisch von Emulgatoren einen HLB-Wert von 8 bis 15 aufweist.

7. Härtbare Zusammensetzung nach mindestens einem der Ansprüche 1 bis 6, **dadurch gekennzeichnet, dass** sie eine siliziumfreie Polymerdispersion ausgewählt aus wässrigen Dispersionen von Poly(meth)acrylaten, Polystyrol, Styrolcopolymeren, Vinylacetatpolymeren oder -copolymeren, Polyolefinen oder deren Mischungen enthält.

8. Härtbare Zusammensetzung nach einem der Ansprüche 1 bis 7, **dadurch gekennzeichnet, dass** die Polyurethandispersion anionische Gruppen aufweist.

9. Härtbare Zusammensetzung nach Anspruch 8, **dadurch gekennzeichnet, dass** das Polyurethanpolymer aus Polyetherpolyolen, Polyesterpolyolen, aminoterminierten Polyoxyalkylenen und/oder hydroxyfunktionellen Polyolefinen sowie Di- bzw. Polyisocyanaten und Dihydroxycarbonsäuren aufgebaut ist.

10. Härtbare Zusammensetzung nach mindestens einem der Ansprüche 1 bis 9, **dadurch gekennzeichnet, dass** das Hydroxylgruppen und/oder hydrolysierbare Gruppen enthaltende Organopolysiloxan eine dynamische Viskosität von 35 bis 1000, insbesondere 100 bis 160 Pa.s (gemessen nach Brookfield DV-II+, Spindel 3, 23°C) hat.

11. Härtbare Zusammensetzung nach mindestens einem der Ansprüche 1 bis 10, enthaltend auf 100 Gewichtsteile Organopolysiloxanöl oder Organopolysiloxanöl-Mischung
a) 0,1 bis 100 Gewichtsteile mindestens eines Vernetzungsmittels,
b) 1 bis 20 Gewichtsteile eines nichtionischen Emulgators oder einer Mischung von Emulgatoren,
c) 0,001 bis 3 Gewichtsteile eines Vernetzungskatalysators, oder einer Katalysatormischung,
d) 0,01 bis 50 Gewichtsteile, vorzugsweise 15 bis 40 Gewichtsteile mindestens einer wässrigen siliziumfreien Polymerdispersion,
e) 50 bis 400 Gewichtsteile mindestens eines Füllstoffs,
f) 1 bis 50 Gewichtsteile, vorzugsweise 2 bis 20 Gewichtsteile Wasser,
g) 0 bis 50 Gewichtsteile weiterer Hilfs- und Zusatzstoffe.

12. Verwendung einer härtbaren Zusammensetzung nach mindestens einem der Ansprüche 1 bis 11 als härtbarer Kleb- oder Dichtstoff oder Beschichtungsmittel mit verbesserten Haftungseigenschaften.

## Claims

1. A curable composition, containing
a) at least one organopolysiloxane that contains hydroxyl groups and/or hydrolysable groups, in aqueous dispersion
b) at least one organopolysiloxane with a dynamic viscosity of 0.05 to 7 Pa.s (measured by Brookfield DV-II+, spindle 3, 23 °C) that is free from hydroxyl groups and/or hydrolysable groups, in aqueous dispersion
c) at least one crosslinking agent,
d) at least one emulsifier,
e) at least one crosslinking catalyst,
f) at least one aqueous silicon-free polyurethane dispersion,
g) at least one filler,
h) optionally water.

2. The curable composition according to claim 1, **characterised in that** the organopolysiloxane that contains hydroxyl groups and/or hydrolysable groups is functionalised with a hydroxyl group on both chain ends and contains no further hydroxyl groups nor hydrolysable groups.

3. The curable composition according to claim 1 or 2, **characterised in that** the composition additionally contains at least one organofunctional silane.

4. The curable composition according to one of claims 1 to 3, **characterised in that** the crosslinking agent is selected from colloidal silica, sodium silicate, pyrogenic or precipitated silica, alkali metal organosilicates, microemulsions of a silsesquioxane resin, reactive silicone resins with a molecular weight of 1000
- 4000 with alkoxy and/or acyloxy groups, silicone resins with a molecular weight of more than 4000 - 10 000, hydroxylated silicone resins, alkoxysilanes, alkylamino silanes, alkylamido silanes or their mixtures.

5. The curable composition according to at least one of claims 1 to 4, **characterised in that** the emulsifier is a non-ionic emulsifier.

6. The curable composition according to at least one of claims 1 to 5, **characterised in that** the emulsifier or the mixture of emulsifiers has an HLB value of 8 to 15.

7. The curable composition according to at least one of claims 1 to 6, **characterised in that** it contains a silicon-free polymer dispersion selected from aqueous dispersions of poly(meth)acrylates, polystyrene, styrene copolymers, vinyl acetate polymers or copolymers, polyolefins or their mixtures.

8. The curable composition according to at least one of claims 1 to 7, **characterised in that** the polyurethane dispersion possesses anionic groups.

9. The curable composition according to claim 8, **characterised in that** the polyurethane polymer is composed of polyether polyols, polyester polyols, amino-terminated polyoxyalkylenes and/or hydroxy-functional polyolefins as well as di- or polyisocyanates and dihydroxycarboxylic acids.

10. The curable composition according to at least one of claims 1 to 9, **characterised in that** the organopolysiloxane that contains hydroxyl groups and/or hydrolysable groups has a dynamic viscosity of 35 to 1000, in particular 100 to 160 Pa.s (measured by Brookfield DV-II+, spindle 3, 23°C).

11. The curable composition according to at least one of claims 1 to 10, containing, based on 100 parts by weight organopolysiloxane oil or organopolysiloxane oil mixture,
a) 0.1 to 100 parts by weight of at least one crosslinking agent,
b) 1 to 20 parts by weight of a non-ionic emulsifier or of a mixture of emulsifiers,
c) 0.001 to 3 parts by weight of a crosslinking catalyst, or of a catalyst mixture,
d) 0.01 to 50 parts by weight, preferably 15 to 40 parts by weight of at least one aqueous silicon-free polymer dispersion,
e) 50 to 400 parts by weight of at least one filler,
f) 1 to 50 parts by weight, preferably 2 to 20 parts by weight water,
g) 0 to 50 parts by weight of further auxiliaries and additives.

12. The use of a curable composition according to at least one of claims 1 to 11 as a curable adhesive or sealant or coating agent with improved adhesion properties.

## Revendications

1. Composition durcissable contenant
a) au moins un organopolysiloxane, contenant des groupes hydroxyle et/ou des groupes hydrolysables en dispersion aqueuse;
b) au moins un organopolysiloxane possédant une viscosité dynamique de 0,05 à 7 Pa.s (mesurée conformément à Brookfield DV-II+, broche 3, 23 °C), qui est exempt de groupes hydroxyle et/ou de groupes hydrolysables, en dispersion aqueuse ;
c) au moins un agent de réticulation ;
d) au moins un émulsifiant ;
e) au moins un catalyseur de la réticulation ;
f) au moins une dispersion aqueuse de polyuréthane exempte de silicium ;
g) au moins une matière de charge ;
h) éventuellement de l'eau.

2. Composition durcissable selon la revendication 1, **caractérisée en ce que** l'organopolysiloxane contenant des groupes hydroxyle et/ou des groupes hydrolysables est fonctionnalisé aux deux extrémités de la chaîne avec respectivement un groupe hydroxyle et ne contient pas d'autres groupes hydroxyle et d'autres groupes hydrolysables.

3. Composition durcissable selon la revendication 1 ou 2, **caractérisée en ce que** la composition contient en outre au moins un silane organofonctionnel.

4. Composition durcissable selon au moins une des revendications 1 à 3, **caractérisée en ce que** l'agent de réticulation est choisi parmi de l'acide silicique colloïdal, du silicate de sodium, de l'acide silicique pyrogène ou précipité, des organosilicates de métaux alcalins, des microémulsions d'une résine de silsesquioxane, des résines réactives de silicone possédant un poids moléculaire de 1000 à 4000 comprenant des groupes alcoxy et/ou à acyloxy, des résines de silicone possédant un poids moléculaire d'une valeur supérieure à 4000 jusqu'à 10 000, des résines de silicone hydrolysées, des alcoxysilanes, des alkylaminosilanes, des alkylamidosilanes, ou leurs mélanges.

5. Composition durcissable selon au moins une des revendications 1 à 4, **caractérisée en ce que** l'émulsifiant est un émulsifiant non ionique.

6. Composition durcissable selon au moins une des revendications 1 à 5, **caractérisée en ce que** l'émulsifiant ou le mélange d'émulsifiants présente une valeur HLB de 8 à 15.

7. Composition durcissable selon au moins une des revendications 1 à 6, **caractérisée en ce qu'**elle contient une dispersion polymère exempte de silicium choisie parmi des dispersions aqueuses de poly(méth)acrylates, de polystyrène, de copolymères de styrène, de polymères ou de copolymères d'acétate de vinyle, de polyoléfines, ou de leurs mélanges.

8. Composition durcissable selon au moins une des revendications 1 à 7, **caractérisée en ce que** la dispersion de polyuréthane présente des groupes anioniques.

9. Composition durcissable selon la revendication 8, **caractérisée en ce que** le polymère de polyuréthane se compose de polyétherpolyols, de polyesterpolyols, de polyoxyalkylènes à terminaison amino et/ou de polyoléfines hydroxyfonctionnelles, ainsi que de diisocyanates respectivement de polyisocyanates et d'acides dihydroxycarboxyliques.

10. Composition durcissable selon au moins une des revendications 1 à 9, **caractérisée en ce que** l'organopolysiloxane contenant des groupes hydroxyle et/ou des groupes hydrolysables possède une viscosité dynamique de 35 à 1.000, en particulier de 100 à 160 Pa.s (mesurée conformément à Brookfield DV-II+, broche 3, 23 °C).

11. Composition durcissable selon au moins une des revendications 1 à 10, contenant, rapporté à 100 parties en poids d'huile d'organopolysiloxane ou d'un mélange d'huiles d'organopolysiloxane
a) à concurrence de 0,1 à 100 parties en poids, au moins un agent de réticulation ;
b) à concurrence de 1 à 20 parties en poids, un émulsifiant non ionique ou un mélange d'émulsifiants ;
c) à concurrence de 0,001 à 3 parties en poids, un catalyseur de la réticulation ou un mélange de catalyseurs ;
d) à concurrence de 0,01 à 50 parties en poids, de préférence de 15 à 40 parties en poids, au moins une dispersion polymère aqueuse exempte de silicium ;
e) à concurrence de 50 à 400 parties en poids, au moins une matière de charge ;
f) à concurrence de 1 à 50 parties en poids, de préférence de 2 à 20 parties en poids, de l'eau ;
g) la concurrence de 0 à 50 parties en poids, d'autres adjuvants et additifs.

12. Utilisation d'une composition durcissable selon au moins une des revendications 1 à 11 à titre d'adhésif ou de substance d'étanchéité ou d'agent d'enduction durcissable possédant des propriétés d'adhérence améliorées.
